# EUROPÄISCHE PATENTANMELDUNG

(11) **EP 3 677 155 A1**
(43) Veröffentlichungstag der Anmeldung: **08.07.2020**
(21) Anmeldenummer: 19150256.6
(22) Anmeldetag: 03.01.2019
(51) Int. Cl.: A47J 31/36, A47J 31/38

(54) **ESPRESSO- UND KAFFEEMASCHINE MIT EINEM DUALEN EXTRAKTIONSSYSTEM**

(71) Anmelder: CUP&CINO Kaffeesystem-Vertrieb GmbH & Co. KG, 33161 Hövelhof (DE)
(72) Erfinder: Epping, Frank Josef Paul, 33161 Hövelhof (DE)
(74) Vertreter: BOVARD AG

(57) **Zusammenfassung**

Die vorliegende Erfindung betrifft eine Espresso- und Kaffeemaschine (10), umfassend eine Brühkammer (16), ausgebildet als zylindrischer Hohlraum, Mittel zum Erzeugen und Abgeben von heissem Wasser unter Druck in die Brühkammer (16), Mittel zum Erzeugen und Abgeben von gemahlenem Kaffeepulver in die Brühkammer (16), einen Brühkolben (18), angeordnet in einer ersten Zylinder/Kolbenanordnung (22) und in der Brühkammer (16) mittels eines Hydrauliksystems (36) beweglich aufgenommen, eine Siebträgereinrichtung (12), an welchem ein Brühsieb (14) in einer Siebaufnahme (13) aufnehmbar ist. Die Brühkammer (16) und die Siebträgereinrichtung (12) sind dabei durch Antriebsmittel (110) relativ zueinander bewegbar.

## Beschreibung

### Technisches Gebiet der Erfindung

Die vorliegende Erfindung bezieht sich auf eine Espresso- und Kaffeemaschine und ein Verfahren zum Betreiben einer Espresso- und Kaffeemaschine. Insbesondere bezieht sich die vorliegende Erfindung auf eine Espresso- und Kaffeemaschine mit einem dualen Extraktionssystem zur Zubereitung von einer oder mehrerer Portionen Espressos oder Kaffees.

### Hintergrund der Erfindung

Im Bereich der Getränkezubereiter, insbesondere im Bereich der Espresso- und Kaffeemaschinen, gibt es diverse unterschiedliche Systeme, welche im Wesentlichen in die Gruppe der sogenannten "Halbautomaten" (auch als "Siebträgermaschinen" bezeichnet) und die Gruppe der sogenannten "Vollautomaten" unterteilt sind. Darüber hinaus gibt es Varianten, welche nicht eindeutig der einen oder anderen Gruppe zugeordnet werden können.

Bei den "Halbautomaten" mit einem abnehmbaren Siebträger werden Kaffeebohnen in einer Mühle zu Kaffeepulver vermahlen, welche im Allgemeinen von der eigentlichen Kaffeemaschine räumlich getrennt ist. Ist die gewünschte Menge an Kaffeepulver in einen Siebträger bzw. einen Siebeinsatz, auch im Folgenden als Sieb oder auch Brühsieb bezeichnet, eingefüllt, wird das Kaffeemehl darin von Hand angedrückt, d.h. getampert, um ein gleichmässig hohes und gleichmässig verdichtetes Kaffeebett zu erzeugen. Dabei können je nachdem ob eine 1er-Portion Espresso der eine 2er-Portion Espresso hergestellt werden soll, unterschiedliche Siebe zum Einsatz kommen. Insbesondere unterscheiden sich hierbei die Siebeinsätze hinsichtlich ihrer Durchmesser, Formgebung und/oder Anzahl und Grösse der Löcher, d.h. ihrer Lochgeometrien. Demnach weist ein für eine 1er-Portion geeignetes Sieb eine niedrigere Anzahl an Löchern und/oder eine Abschrägung der Seitenwand des Siebträgers im Vergleich zu einem für eine 2er-Portion geeigneten Siebträger auf.

Die Siebgeometrie steht in unmittelbaren Zusammenhang mit der hohen Qualität des Espressos bzw. Kaffees und richtet sich dabei unter anderem nach der Kaffeesorte, dem Mahlgrad und der Art des eingesetzten Siebs. Nach dem Einfüllen einer Menge an Kaffeepulver bzw. Kaffeemehl in den Siebträger und manueller Verpressung, wird der in einem Siebträgerhalter aufgenommene Siebträger manuell in die Kaffeemaschine eingespannt und es folgt der eigentliche Brühvorgang. Hierbei dosiert die Kaffeemaschine heisses Wasser unter Druck über ein in diese fest eingebautes Verteilerelement in den Siebträger, von dem der aufgebrühte Kaffee direkt in eine bereitgestellte Tasse abgegeben wird. Neben anderen individuellen Variationsmöglichkeiten bietet ein Halbautomat auch die Möglichkeit, den richtigen Siebeinsatz für die gewünschte Portion an Espresso oder Kaffee zu wählen.

In der grossen Gruppe der vollautomatischen Espresso- und Kaffeemaschinen finden die Vorgänge des Mahlens, des Dosierens und des Tamperns, sowie der eigentliche Brühvorgang automatisch statt. Ein Wechsel des Brühsiebs ist in der Regel nicht vorgesehen. So umfasst eine derartige Kaffeemaschine eine Einbaumühle, welche eine definierte Kaffeemenge je nach gewähltem Programm in bzw. auf ein Brühsieb eindosiert. Dabei kann eine Brühgruppe als Kolben-Zylinder-Anordnung ausgebildet sein, mit einem Zylinder und in dem Zylinder beweglich aufgenommenen oberen und unteren Kolben, welche jeweils Siebe aufweisen, die als Verteiler- bzw. Brühsieb fungieren. In den von den Kolben verschlossenen Zylinder wird heisses Wasser eingeleitet, welches über das Verteilersieb über das verdichtete Kaffeepulver verteilt wird, dieses durchströmt und als Espresso oder Kaffee in eine bereitgestellte Tasse geleitet wird.

Bei vollautomatischen Espresso- und Kaffeemaschinen, bei denen weitgehend alle Vorgänge zur Herstellung eines Espressos oder Kaffees automatisch ohne eine wie auch immer geartete Einflussnahme von aussen erfolgen, ist bei der Herstellung einer einfachen oder einer doppelten Portion Espresso bzw. Kaffee kein Wechsel des Brühsiebs vorgesehen. Das universelle Brühsieb ist auf den darin auffahrenden oder eintauchenden Kolbendurchmesser und auf den Durchmesser des die Brühkammer bildenden Zylinders abgestimmt. Aufgrund der unterschiedlichen Menge an einzufüllendem Kaffeepulver und des gewählten Mahlgrades ergeben sich erhebliche Unterschiede in der Kuchenhöhe des eingefüllten Kaffeepulvers bei der Herstellung einer einfachen oder einer doppelten Portion. Generell wird für eine einfache Portion Kaffee in etwa 7 bis 9 g Kaffeepulver mit einem feinen Mahlgrad auf bzw. in ein Sieb eingefüllt, und bildet dabei einen Kuchen mit einer geringen Kuchenhöhe. Bei geringer Kuchenhöhe kann es zum sogenannten Channeling kommen. Channeling entsteht durch Risse und/oder Hohlräume im Kaffeemehl, sowie bei einer rauen, unebenen Oberfläche des präparierten Kaffeekuchens und führt zu einer ungleichmässigen Extraktion des Kaffeepulvers mit entsprechendem Qualitätsverlust.

Es ist bekannt, dass bei kleinen Kaffeemengen mit feinem Mahlgrad weniger Channeling auftritt, da eventuelle Unregelmässigkeiten teilweise selbst im feuchten bzw. nassen Kaffeekuchen ausgeglichen werden können. Allerdings wirkt sich dies wiederum nachteilig bei der Herstellung einer doppelten Portion aus, welche mit dem gleichen bzw. universellen Brühsieb erfolgt. Die Herstellung einer 2er-Portion erfolgt im Allgemeinen mit ca. 14 bis 20 g Kaffeepulver, welche mit einer feinen Mahlgrad-Einstellung auf dem Sieb einen hohen Kaffeekuchen erzeugt. Dies kann zu Blockaden bei der Extraktion führen und somit ebenfalls zu einem unbefriedigenden Ergebnis der Kaffeequalität.

Demnach ist bekannt, bei einer vorgegebenen Geometrie des Kolbens und ohne die Möglichkeit des Wechsel des Brühsiebs bzw. des Siebträgers bei der Herstellung des Kaffeegetränks, den Mahlgrad des Kaffeepulvers und den Siebdurchmesser derart aufeinander abzustimmen, dass die Kaffeequalität sowohl für eine 1er- als auch für eine 2er-Portion zumindest zufriedenstellend ist. Allerdings ist die damit erzeugte Kaffeequalität nicht optimal und gegenüber einer Siebträgermaschine deutlich geringer.

### Zusammenfassung der Erfindung

Die Aufgabe der vorliegenden Erfindung ist es eine Espresso- und Kaffeemaschine bereitzustellen, welche bei einem weitgehend vollautomatischen Brühvorgang einen Wechsel eines Brühsiebs und damit des Extraktionssystems ermöglicht. Ferner wird ein Verfahren zum Betreiben einer solchen Espresso-Kaffeemaschine bereitgestellt.

Diese Aufgaben werden durch die Merkmale der unabhängigen Ansprüche gelöst. Besonders vorteilhafte Ausführungsformen sind in den abhängigen Ansprüchen und in der Beschreibung erwähnt.

Die erfindungsgemässe Espresso- und Kaffeemaschine umfasst eine Brühkammer, welche als zylindrischer Hohlraum ausgebildet ist, Mittel zum Erzeugen und Abgeben von heissem Wasser unter Druck in die Brühkammer und Mittel zum Erzeugen und Abgeben von gemahlenem Kaffeepulver in die Brühkammer, sowie einen Brühkolben, beispielsweise angeordnet in einer ersten Zylinder/Kolbenanordnung und mittels eines Hydrauliksystems in der Brühkammer beweglich aufgenommen und eine Siebträgereinrichtung, an welchem ein Brühsieb in einer Siebaufnahme aufnehmbar ist. Erfindungsgemäss sind die Brühkammer und die Siebträgereinrichtung mittels Antriebsmitteln relativ zueinander bewegbar.

Während eines Brühvorgangs sind der Brühkolben, die Brühkammer und die Siebträgereinrichtung in eine Brühstellung bewegbar, wobei die Brühkammer in einer an der Siebträgereinrichtung koaxial zu dem in der Siebaufnahme aufgenommenen Brühsieb ausgebildeten Aufnahme aufgenommen und mittels Dichtmitteln die Brühkammer abgedichtet ist. Darüber hinaus sind der Brühkolben, die Brühkammer und die Siebträgereinrichtung in eine offene Stellung bewegbar, wobei der Brühkolben und die Brühkammer sich in einer oberen Ausgangsstellung befinden und die Siebträgereinrichtung und die Brühkammer voneinander getrennt sind. In der offenen Stellung der Komponenten der Brühgruppe, umfassend Brühsieb, Brühkolben und Brühkammer, ist Zugriff zu den einzelnen Komponenten von aussen möglich, so dass unteranderem ein geeignetes Brühsieb eingesetzt werden kann. Ferner können auch einem Verschleiss unterworfene Komponenten, z.B. Dichtmittel, ausgetauscht werden und/oder die einzelnen Komponenten gereinigt werden.

In die sich in der Brühstellung befindliche Brühkammer ist gemahlenes Kaffeepulver einfüllbar.

Insbesondere sind in der Brühstellung der Brühkolben, die Brühkammer und das Brühsieb in vertikaler Richtung entlang einer Längsachse in der Espresso- und Kaffeemaschine angeordnet und bilden eine abgedichtete Brüheinheit. Die Bewegung des Brühkolbens und der Brühkammer erfolgt entlang der Längsachse mittels eines manuell betriebenen Hebelsystems und/oder einer Hydraulikeinrichtung.

Zur Abdichtung der Brühkammer gegen das Brühsieb steht ein unterer Bereich des zylindrischen Hohlraums mit einem Dichtmittel in dichtendem Kontakt. In einer bevorzugten Ausführungsform ist das Dichtmittel ein O-Ring, welcher in der koaxial zur Siebaufnahme ausgebildeten Aufnahme an der Siebträgereinrichtung angeordnet ist. Alternativ kann das Dichtmittel aber auch an einer Aussenfläche des zylindrischen Hohlraums vorgesehen sein und in der Aufnahme in der zweiten Stellung eine radiale Dichtung erzeugen.

Die automatische oder manuelle Bewegung des Brühkolbens und/oder der Brühkammer in die offene Stellung, d.h. in die obere Ausgangsstellung kann vorzugsweise durch eine Rückstellkraft entsprechend angeordneter Federelemente unterstützt werden.

In einer Ausführungsform der Espresso- und Kaffeemaschine sind an der Siebträgereinrichtung mehrere Siebaufnahmen ausgebildet, an welchen jeweils Brühsiebe aufnehmbar sind, welche sich insbesondere hinsichtlich ihrer Sieblochgeometrie unterscheiden. Demnach eignet sich eines der daran aufnehmbaren Brühsiebe zur Herstellung einer 1er-Portion Kaffee und eines der aufgenommenen Brühsiebe zur Herstellung einer 2er-Portion Kaffee geeignet sind.

In einer bevorzugten Ausführungsform ist die Siebträgereinrichtung als Drehteller ausgebildet und mittels Antriebsmitteln um eine Drehachse drehbar, so dass zur Erzeugung einer vorbestimmten Anzahl Portionen die Siebträgereinrichtung derart positionierbar ist, z.B. die Siebträgereinrichtung um die Drehachse gedreht ist, dass das auf die Anzahl der Portion abgestimmte Brühsieb in Brühstellung kommt.

Vorzugsweise sind an der als Drehteller ausgebildeten Siebträgereinrichtung mehrere Siebaufnahmen symmetrisch zu der Drehachse angeordnet. Die Siebträgereinrichtung kann drehfest auf einer Drehwelle angeordnet sein, welche mittels der Antriebsmittel gedreht werden kann. Denkbar ist auch, dass die Siebträgereinrichtung als horizontal verschiebbare Platte ausgebildet ist, so dass entsprechend angeordnete Siebaufnahmen bzw. daran angeordnete Brühsiebes durch eine horizontale Bewegung in Brühstellung bringbar sind. Die Antriebsmittel zum Positionieren bzw. Drehen der als Drehteller ausgebildeten Siebträgereinrichtung sind im Hinblick auf eine kompakte Bauweise vorzugsweise seitlich zur Siebträgereinrichtung angeordnet und mit einer Kupplungseinrichtung antreibend verbunden. Vorzugsweise ist die Kupplungseinrichtung eine Rutschkupplung. Insbesondere können die Antriebsmittel von einer Steuereinheit gesteuert werden, beispielsweise der Steuereinheit der weitgehend vollautomatischen Espresso- und Kaffeemaschine, welche deren Vorgänge steuert.

Ferner ist mindestens ein Sensor vorgesehen, um die Stellung von Brühkammer, Brühkolben und Brühsieb zu detektieren und das Signal einer Steuereinheit zu übermitteln. Bevorzugt ist ein Hall-Sensor vorgesehen.

Erfindungsgemäss ist vorgesehen, dass nach einem Brühvorgang und nach Verfahren von Brühkolben, Brühkammer und Siebträgereinrichtung in die offene Stellung die Siebträgereinrichtung mittels der Antriebsmittel weiter in eine Stellung bewegbar ist, in welcher das Kaffeepulver mittels eines Abstreifmittels entfernbar ist. Der Kaffeekuchen wird dann mittels Drehteller um 180° gedreht in die Position des Satzbehälters, wo ein Abstreifer den Kuchen abstreift. Die Siebträgereinrichtung kann vorteilhaft mindestens teilweise als Wabenform konstruiert sein. Auf diese Weise kann der Kuchen abgestreift werden und dabei durch die offenen Flächen in der Wabenstruktur in den darunter liegenden Satzbehälter fallen.

Zur einfachen Reinigung der bei einem Brühvorgang zu erwartenden Verschmutzung der Komponenten, insbesondere des Brühsiebs und der Siebträgereinrichtung ist vorgesehen, dass die Siebträgereinrichtung aus der Espresso- und Kaffeemaschine herausnehmbar und reinigbar ist.

Insbesondere kann die gesamte Siebträgereinrichtung einfach demontiert werden und beispielsweise in einem Geschirrspüler gereinigt werden. Hierfür kann vorgesehen sein, dass die Siebträgereinrichtung in einem zu öffnenden Gehäuse untergebracht ist. Auch die Dichtmittel, welche zur Abdichtung der Brühkammer und/oder des Brühkolbens vorgesehen sind, können von einem Benutzer einfach ausgeführt werden.

Generell weist die erfindungsgemässe Espresso- und Kaffeemaschine einen Brühkolben auf, welcher vorzugsweise mit einer radial wirkenden Dichtung verschieblich in der Brühkammer aufgenommen, und in eine Pressstellung zum Verdichten des eingefüllten Kaffeepulvers und/oder in eine Brühstellung bewegbar ist. Insbesondere ist der Brühkolben einer ersten Zylinder/Kolbenanordnung zugeordnet, wobei die Bewegung des Brühkolbens mittels Stellmitteln erfolgen kann, welche beispielsweise ein Hydrauliksystem, mit einer weiteren Zylinder/Kolbenanordnung und einen Betätigungshebel umfassen. Der Betätigungshebel steht derart in Wirkverbindung mit einem Kolben dieser weiteren Zylinder/Kolbenanordnung, dass bei Bewegung des Betätigungshebels in eine Richtung Druck in dem Hydrauliksystem aufgebaut wird, so dass der Brühkolben in der Zylinder/Kolbenanordnung in der Brühkammer verschoben wird. Ferner kann vorgesehen sein, dass die zur Herstellung von Espresso bzw. Kaffee aktivierten Abläufe von der auf dem Betätigungshebel wirkenden Kraft entkoppelt sind. Dabei löst die Bewegung des Betätigungshebels eine Abfolge von Vorgängen aus, welche zumindest teilweise automatisch erfolgen. Demnach kann durch die Bewegung des Betätigungshebels in eine Richtung neben einer Verschiebung von Fluid des Hydrauliksystems in einen Ausgleichsbehälter, eine Schaltung aktiviert werden, welche eine Bewegung des Brühkolbens bewirkt, wobei ein damit erzeugter Druck des Brühkolbens regelbar ist. So kann der Brühkolben in jeder Position entlang seines Verfahrweges positioniert werden, wobei eine Steuerung über eine Steuereinheit und entsprechende Steuereinrichtungen erfolgt. Insbesondere wird sichergestellt, dass der Brühkolben verlässlich in seine unterste Position bewegt wird, unabhängig davon, ob eine manuelle oder eine weitgehend automatische Betätigung vorgesehen ist.

In der Brühstellung erfolgen die zur Zubereitung eines Heissgetränks erforderlichen Schritte erfolgen, d.h. die Befüllung der Brühkammer mit gemahlenem Kaffeepulver, Verdichten bzw. Tampern desselben mittels dem in die Brühkammer in eine Verdichtungsposition bewegbaren Brühkolben und Bewegen des Brühkolbens in eine Brühstellung, wobei eine am Brühkolben vorgesehene Dichteinrichtung, beispielsweise eine radiale Dichtung, die Brühkammer abdichtet. Zur Kaffeeherstellung wird heisses Wasser über den verdichteten Kaffeekuchen mittels einer Verteilereinrichtung verteilt. Die Verteilereinrichtung kann ein am Brühkolben angeordnetes Verteilersieb sein. Der Brühkolben kann ausgebildet sein, um entsprechend mit dem heissen Wasser beaufschlagt zu werden, wobei insbesondere eine seitliche Einleitung in die Brühgruppe bzw. Brüheinheit vorgesehen ist. Durch einen kurzen Strömungsweg des heissen Wassers bis zur Verteilung über das Kaffeepulver und eine Reduzierung der zu erwärmenden Massen, reduziert sich der Temperaturverlust und ein stabiles Temperaturniveau kann erreicht werden. Über das angeordnete Brühsieb wird das aufgebrühte heisse Getränk via der Ausgabeeinrichtung in eine bzw. zwei dort bereitgestellte Tassen oder Behältnisse abgegeben.

Ferner wird erfindungsgemäss ein Verfahren zum Betreiben der Espresso- und Kaffeemaschine bereitgestellt, umfassend die Schritte: Einsetzen eines Brühsiebs in eine dafür an einer Siebträgereinrichtung vorgesehene Siebaufnahme, Bewegen einer als zylindrischen Hohlraum ausgebildeten Brühkammer in eine koaxial zur Siebaufnahme ausgebildeten Aufnahme an der Siebträgereinrichtung in eine dichtende Brühstellung, Einfüllen von einer vorbestimmten Portion an gemahlenem Kaffeepulver in die Brühkammer, Bewegen eines in einer ersten Zylinder/Kolbenanordnung angeordneten Brühkolbens in die Brühkammer mittels eines von einem Hydrauliksystem bereitgestellten Drucks auf den Brühkolben, wobei die Brühkammer verschlossen wird, Verpressen des Kaffeepulvers in der Brühkammer zu einem Kaffeekuchen durch den Brühkolben, Verteilen von heissem Wasser auf dem verpressten Kaffeekuchen, Bewegen des Brühkolbens und der Brühkammer zurück in eine obere Ausgangsposition, Bewegen der Siebträgereinrichtung in eine Stellung zum Entfernen des ausgelaugten Kaffeepulvers mittels Abstreifmittel. In einer Ausführungsform wird das an der Siebträgereinrichtung aufgenommene Brühsieb durch Drehen um eine Drehachse in Brühstellung gebracht.

### Kurzbeschreibung der Zeichnungen

Im Folgenden wird die Erfindung anhand der in den Figuren dargestellten Ausführungsbeispiele näher erläutert. Es zeigen:
Fig. 1 eine schematische Darstellung einer erfindungsgemässen Espresso- und Kaffeemaschine;
Fig. 2 eine schematische Darstellung einer Brühgruppe der erfindungsgemässen Espresso- und Kaffeemaschine in einer offenen Stellung; und
Fig. 3 eine schematische Darstellung einer Siebträgereinrichtung gemäss einer Ausführungsform der erfindungsgemässen Espresso- und Kaffeemaschine.

### Detaillierte Beschreibung der Ausführungsform der Erfindung

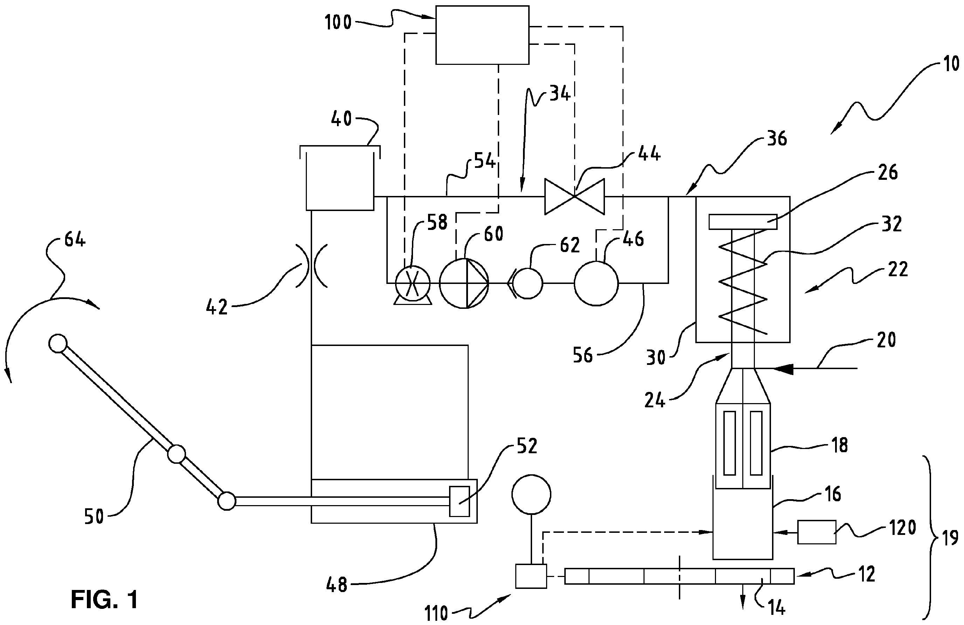

In Figur 1 ist schematisch eine erfindungsgemässe Espresso- und Kaffeemaschine dargestellt, kurz als Maschine 10 bezeichnet. Die schematisch dargestellte Maschine 10 umfasst eine Siebträgereinrichtung 12, in welche zumindest ein Brühsieb 14 aufnehmbar ist. Details der erfindungsgemässen Siebträgereinrichtung 12 werden in Zusammenhang mit den nachfolgenden Figuren im Detail beschrieben. Die Siebträgereinrichtung 12 kann mit einer Brühkammer 16 in Kontakt gebracht werden, wobei auch eine Ausgabevorrichtung (nicht dargestellt) vorgesehen ist, um den als Filtrat vorliegenden Espresso bzw. Kaffee in bereitgestellte Tassen abzugeben. Die Brühkammer 16 ist mit heissem, unter Druck stehendem Wasser beaufschlagbar, angedeutet mit Pfeil 20. In der Brühkammer 16 ist verschieblich ein Brühkolben 18 aufgenommen, welcher einer ersten Zylinder/Kolbenanordnung 22 zugeordnet ist. Brühkammer 16, Brühkolben 18 und Siebträgereinrichtung 12 mit Brüheinsatz 14 können zusammengefasst als Brühgruppe 19 bezeichnet werden. Angedeutet mit 110 sind Antriebsmittel, welche in Wirkverbindung mit der Siebträgereinrichtung 12 und/oder mit der Brühkammer 16 stehen.

In der dargestellten Ausführungsform umfasst die erste Zylinder/Kolbenanordnung 22 einen Doppelkolben 24, der aus einem unteren Kolben 18 und einem oberen Kolben 26 besteht, welche durch eine starre Kolbenstange miteinander verbunden sind. Der untere Kolben ist als Brühkolben 18 ausgebildet und in die Brühkammer 16 verschieblich aufgenommen. Der obere Kolben 26 ist verschieblich in einer Fluidkammer bzw. einer Hydraulikkammer 30 aufgenommen. Der obere Kolben 26 wird von einem Federelement 32 nach oben in eine obere Ausgangsstellung gedrückt. An dem oberen Kolben 26 und dem unteren Kolben, dem Brühkolben 18, sind jeweils radial wirkende Dichtungen vorgesehen, welche einerseits mit der Hydraulikkammer 30 und andererseits mit der Brühkammer 16 in dichtendem Kontakt stehen (nicht dargestellt).

Die Hydraulikkammer 30 ist einem Fluid- bzw. einem Hydrauliksystem zugeordnet, welches allgemein mit der Bezugsziffer 34 bezeichnet ist. Das Hydrauliksystem 34 umfasst ein Leitungssystem 36, welches mit Hydraulikfluid beaufschlagt ist. Das Hydrauliksystem 34 ist befüllbar und umfasst einen Ausgleichsbehälter 40. Zwischen dem Ausgleichsbehälter 40 und der ersten Zylinder/Kolbenanordnung 22 besteht eine fluidleitende Verbindung entweder entlang eines ersten Strömungsweges 54 des Leitungssystems 36 über ein Ventil 44 oder entlang eines zweiten Strömungswegs 56, über eine Durchflussmesseinrichtung 58, eine Pumpe 60, ein Rückschlagventil 62 und einen Drucksensor 46.

In der dargestellten Ausführungsform ist ferner eine zweite Zylinder/Kolbenanordnung 48 mit einem Betätigungshebel 50 vorgesehen, welcher mit einem Hydraulikkolben 52 der zweiten Zylinder/Kolbenanordnung 48 gekoppelt und mit dem Ausgleichsbehälter 40 über eine Drossel 42 fluidleitend verbunden ist. Bei Betätigung des Betätigungshebels 50 von einer Startposition in eine Endposition und umgekehrt, bezeichnet mit der Bezugsziffer 64, wird die Bewegung auf den Hydraulikkolben 52 der zweiten Zylinder/Kolbenanordnung 48 übertragen, so dass Hydraulikfluid aus der zweiten Zylinder/Kolbenanordnung 48 in das Leitungssystem 36 mit einem sich aufbauenden Druck gedrückt wird. Dadurch wird der Druck auf den oberen Kolben 26 der ersten Zylinder/Kolbenanordnung 22 derart erhöht, dass der Doppelkolben 24 nach unten bewegt wird, wobei der Brühkolben 18 in die Brühkammer 16 verschoben wird. Der Brühkolben 18 kann dabei das auf dem Brüheinsatz 14 angehäufte Kaffeepulver zu einem Kaffeekuchen verdichten oder in eine Brühstellung für den Brühvorgang verbracht werden. Nach Beendigung des Brühvorgangs wird der Druck in dem Hydrauliksystem 34 aufgehoben und Betätigungshebel 50 und Doppelkolben 24 bewegen sich jeweils in Ihre Ausgangspositionen.

Gemäss der dargestellten Ausführungsform der erfindungsgemässen Espresso- und Kaffeemaschine 10 kann beim Bewegen des Betätigungshebels 50 mittels einer Steuereinheit 100 ein Signal an die Pumpe 58 übermittelt werden, so dass mittels der aktivierten Pumpe 58 in dem Hydrauliksystem 34 der zum Bewegen des Brühkolbens 18 erforderliche Druck aufgebaut wird.

Ferner sind Sensoren, allgemein bezeichnet mit Bezugszeichen120, vorgesehen, welche es erlauben, die Position von Brühkammer 16, Brühkolben 18 und Brühsieb 14 bzw. Siebträgereinrichtung 12 zu detektieren und ein entsprechendes Signal an die Steuereinheit 100 zu übermitteln. Nur wenn die die Brühgruppe 19 bildenden Komponenten richtig zueinander positioniert sind, kann ein Brühvorgang gestartet werden.

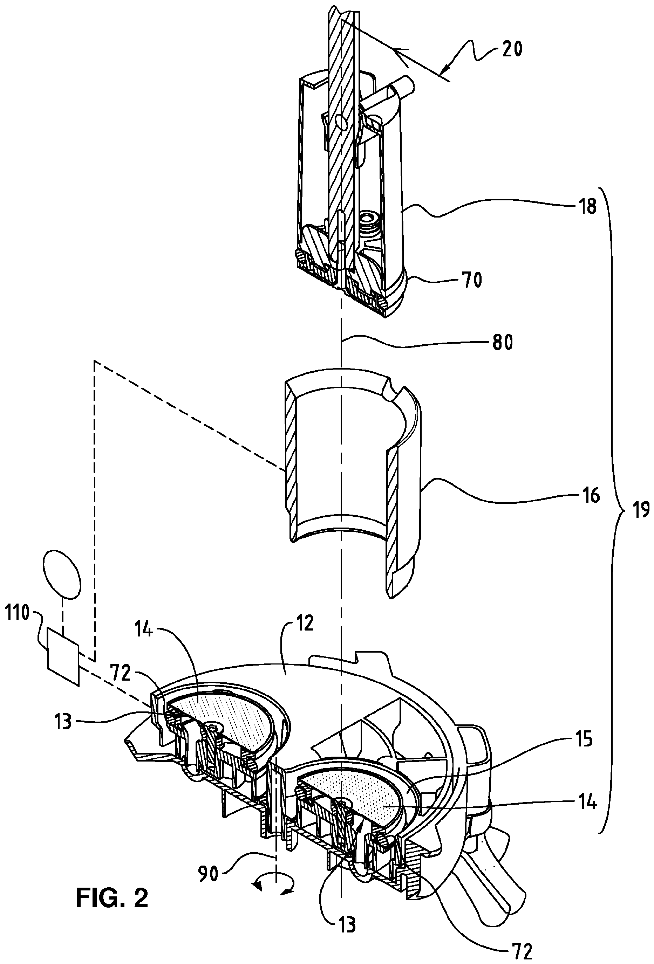

In Figur 2 ist die Brühgruppe 19 der erfindungsgemässen Espresso- und Kaffeemaschine 10 dargestellt. Die Brühgruppe 19 umfasst den Brühkolben 18, welcher eine radiale Dichtung 70 aufweist, und welcher vertikal beweglich entlang einer Längsachse 80 in der Brühkammer 16 aufgenommen ist. Die Brühkammer 16 ist als zylindrischer Hohlraum ausgebildet und kann entlang der Längsachse 80 in vertikaler Richtung verfahren werden, beispielsweise mittels der Antriebsmittel 110. In einer geschlossenen Stellung ist die Brühkammer 16 mit einem unteren Bereich in eine an der Siebträgereinrichtung 12 ausgebildete Aufnahme 15 aufgenommen und steht in dieser Stellung in dichtendem Kontakt mit einem Dichtmittel 72, welches koaxial das Brühsieb 14 umgibt, welches an der Siebträgereinrichtung 12 an einer dafür ausgebildeten Siebaufnahme 13 aufgenommen ist. Die Siebträgereinrichtung 12 umfasst in der dargestellten Ausführungsform eine erste Siebaufnahme 13 und eine zweite Siebaufnahme 13, in welche jeweils ein erstes Brühsieb 14 und ein zweites Brühsieb 14 gehaltert sind und an welchen jeweils das Dichtmittel 72 vorgesehen ist, welches in einer entsprechenden Stellung in dichtenden Kontakt mit der als zylindrischen Hohlraum ausgebildete Brühkammer 16 gebracht werden kann.

Die Siebträgereinrichtung 12 ist vorzugsweise als Drehteller ausgebildet, welcher um eine Drehachse 90 drehbar ist. Die Drehung der Siebträgereinrichtung 12 kann beispielsweise durch Antriebsmittel 110, welche bevorzugt seitlich neben der Brühgruppe 19 angeordnet sind, angetrieben werden. Die erste Siebaufnahme 13 und die zweite Siebaufnahme 13 sind symmetrisch zur Drehachse 90 vorgesehen, so dass bei einer Drehung um 180° jeweils entweder die erste Siebaufnahme 13 oder die zweite Siebaufnahme 13 in eine Stellung gebracht werden kann, so dass die als zylindrischer Hohlraum ausgebildete Brühkammer 16 in eine dichtende Stellung in die jeweilige Aufnahme 15 verschoben werden kann. Demnach sind die Brühsiebe 14 entkoppelt von der Brühkammer 16 und dem Brühkolben 18. Wie schon oben erwähnt kann die Siebträgereinrichtung aber auch so ausgebildet sein, dass die beiden Siebaufnahmen statt durch eine Drehung durch eine lineare Bewegung der Siebträgereinrichtung in die jeweilige Position gebracht werden.

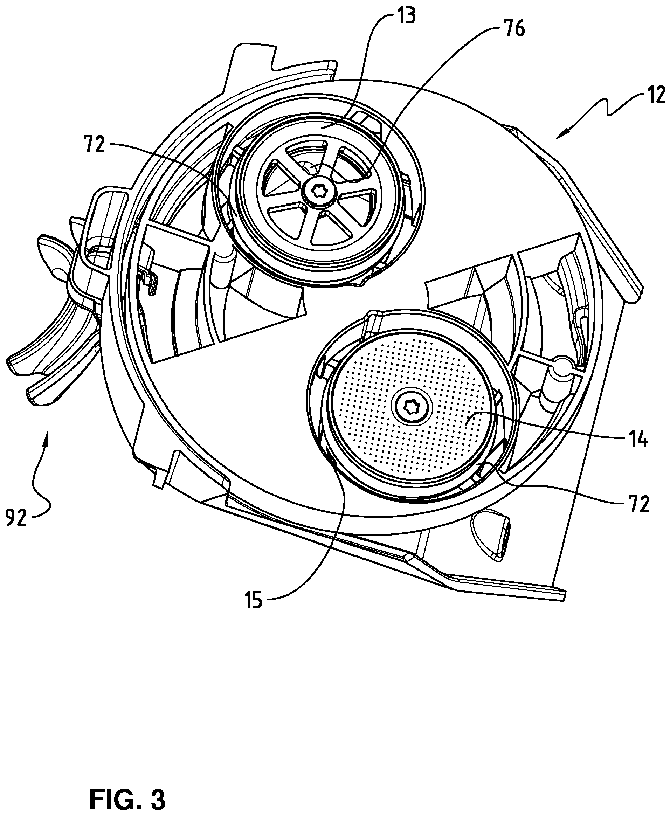

In Figur 3 ist eine Ausführungsform einer als Drehteller ausgebildeten Siebträgereinrichtung 12 dargestellt. Erkennbar sind die in diesem Fall eine erste Siebaufnahme 13 und eine zweite zwei Siebaufnahme 13, welche ausgebildet sind, um jeweils ein Brühsieb 14 darin zu haltern. Ferner ist erkennbar, das an jeder Siebaufnahme 13 eine Öffnung 76 vorgesehen ist, durch welche der zubereitete Kaffee via einer Ausgabeeinrichtung 92 in eine entsprechend bereitgestellte Tasse abgegeben werden kann. Die an der Siebträgereinrichtung 12 aufnehmbaren Brühsiebe 14 weisen unterschiedliche Sieblochgeometrien auf, welche in diesem spezifischen Fall darauf abgestimmt sind, eine 1er-Portion oder eine 2er-Portion Kaffee zu erzeugen. Selbstverständlich sind aber auch andere Sieblochgeometrien denkbar.

Zum Schluss sei darauf hingewiesen, dass die hier beispielhaft beschriebenen Ausführungsbeispiele nur eine Auswahl an möglichen Realisierungen des erfindungsgemässen Gedanken darstellen, und dass sie deshalb als nicht limitierend angeschaut werden sollen. Der Fachmann wird ohne weiteres verstehen, dass viele andere Implementierungen der vorliegenden Erfindung, inklusive der Zugabe vieler weiterer Funktionen bzw. der Kombination der vielen verschiedenen Elemente möglich sind, ohne dass dabei die wesentlichen Merkmale der Erfindung vernachlässigt werden müssen.

## Patentansprüche

1. Espresso- und Kaffeemaschine (10), umfassend
eine Brühkammer (16), welche als zylindrischer Hohlraum ausgebildet ist,
Mittel zum Erzeugen und Abgeben von heissem Wasser unter Druck in die Brühkammer (16),
Mittel zum Erzeugen und Abgeben von gemahlenem Kaffeepulver in die Brühkammer (16),
einen Brühkolben (18), welcher in der Brühkammer (16) mittels eines Hydrauliksystems (36) beweglich aufgenommen ist,
eine Siebträgereinrichtung (12), an welchem ein Brühsieb (14) in einer Siebaufnahme (13) aufnehmbar ist,
**dadurch gekennzeichnet, dass**
die Brühkammer (16) und die Siebträgereinrichtung (12) durch Antriebsmittel (110) relativ zueinander bewegbar sind.

2. Espresso- und Kaffeemaschine (10) nach Anspruch 1, **dadurch gekennzeichnet, dass** der Brühkolben (18), die Brühkammer (16) und die Siebträgereinrichtung (12) in eine Brühstellung bewegbar sind, wobei die Brühkammer (16) in einer an der Siebträgereinrichtung (12) koaxial zu dem in der Siebaufnahme (13) aufgenommenen Brühsieb (14) ausgebildeten Aufnahme (15) aufgenommen und mittels Dichtmitteln (72) die Brühkammer abgedichtet ist und dass der Brühkolben (18), die Brühkammer (16) und die Siebträgereinrichtung (12) in eine offene Stellung bewegbar sind, wobei der Brühkolben (18) und die Brühkammer (16) sich in einer oberen Ausgangsstellung befinden und die Siebträgereinrichtung (12) und die Brühkammer (16) voneinander getrennt sind.

3. Espresso- und Kaffeemaschine (10) nach Anspruch 2, **dadurch gekennzeichnet, dass** in der Brühstellung gemahlenes Kaffeepulver in die Brühkammer (16) einfüllbar ist.

4. Espresso- und Kaffeemaschine (10) nach einem der vorhergehenden Ansprüche, **dadurch gekennzeichnet, dass** an der Siebträgereinrichtung (12) mehrere Siebaufnahmen (13) ausgebildet sind, an welchen jeweils Brühsiebe (14) aufnehmbar sind.

5. Espresso- und Kaffeemaschine (10) nach Anspruch 4, **dadurch gekennzeichnet, dass** die an der Siebträgereinrichtung (12) aufnehmbaren Brühsiebe (14) sich hinsichtlich einer Sieblochgeometrie unterscheiden.

6. Espresso- und Kaffeemaschine (10) nach Anspruch 4 oder 5, **dadurch gekennzeichnet, dass** in der Siebträgereinrichtung (12) eines der aufgenommenen Brühsiebe (14) zur Herstellung einer 1er Portion Kaffee und eines der aufgenommenen Brühsiebe (14) zur Herstellung einer 2er Portion Kaffee geeignet sind.

7. Espresso- und Kaffeemaschine (10) nach Anspruch 6, **dadurch gekennzeichnet, dass** zur Erzeugung einer vorbestimmten Anzahl Portionen die Siebträgereinrichtung (12) derart positionierbar ist, dass das auf die Anzahl der Portionen abgestimmte Brühsieb (14) in Brühstellung kommt.

8. Espresso- und Kaffeemaschine (10) nach einem der vorhergehenden Ansprüche, **dadurch gekennzeichnet, dass** die Siebträgereinrichtung (12) als Drehteller ausgebildet und mittels Antriebsmitteln (110) um eine Drehachse (90) drehbar ist.

9. Espresso- und Kaffeemaschine (10) nach einem der Ansprüche 1 bis 7, **dadurch gekennzeichnet, dass** die Siebträgereinrichtung (12) als horizontal verschiebbare Platte ausgebildet ist.

10. Espresso- und Kaffeemaschine (10) nach einem der vorhergehenden Ansprüche, **dadurch gekennzeichnet, dass** mindestens ein Sensor (120) vorgesehen ist, um die Stellung von Brühkammer (16), Brühkolben (18) und Brühsieb (14) zu detektieren und das Signal einer Steuereinheit (100) zu übermitteln.

11. Espresso- und Kaffeemaschine (10) nach Anspruch 10, **dadurch gekennzeichnet, dass** in der offenen Stellung die Siebträgereinrichtung (12) mittels den Antriebsmitteln (110) in eine Stellung bewegbar ist, in welcher das Kaffeepulver mittels eines Abstreifmittels entfernbar ist.

12. Espresso- und Kaffeemaschine (10) nach Anspruch 11, **dadurch gekennzeichnet, dass** die Siebträgereinrichtung (12) mindestens teilweise als Wabenform konstruiert ist.

13. Espresso- und Kaffeemaschine (10) nach einem der vorhergehenden Ansprüche, **dadurch gekennzeichnet, dass** die Siebträgereinrichtung (12) aus der Espresso- und Kaffeemaschine (10) herausnehmbar und reinigbar ist.

14. Verfahren zum Betreiben der Espresso- und Kaffeemaschine (10) nach einem der Ansprüche 1 bis 13, umfassend die folgenden Schritte:
- Einsetzen des Brühsiebs (14) in die dafür an der Siebträgereinrichtung (12) vorgesehenen Siebaufnahme (13),
- Bewegen der als zylindrischen Hohlraum ausgebildeten Brühkammer (16) in die koaxial zur Siebaufnahme (13) ausgebildeten Aufnahme (15) an der Siebträgereinrichtung (12) in eine dichtende Brühstellung,
- Einfüllen von einer vorbestimmten Portion an gemahlenem Kaffeepulver in die Brühkammer (16),
- Bewegen des Brühkolbens (18) in die Brühkammer (16) mittels eines von dem Hydrauliksystem (36) bereitgestellten Drucks auf den Brühkolben (16), wobei die Brühkammer (16) verschlossen wird,
- Verpressen des Kaffeepulvers in der Brühkammer (16) durch den Brühkolben (16) zu einem Kaffeekuchen,
- Verteilen von heissem Wasser auf dem verpressten Kaffeekuchen,
- Bewegen des Brühkolbens (18) und der Brühkammer (16) zurück in die obere Ausgangsposition, und
- Bewegen der Siebträgereinrichtung (12) in eine Stellung zum Entfernen des verbrauchten Kaffeepulvers mittels Abstreifmitteln.

15. Verfahren nach Anspruch 14, **dadurch gekennzeichnet, dass** nach dem Einsetzen des Brühsiebs (14) in die Siebaufnahme (13) die Siebträgereinrichtung (12) durch Drehen um eine Drehachse in Brühstellung bewegt wird.
